(19) Europäisches Patentamt
European Patent Office
Office européen des brevets

(11) Publication number: 0 116 924
A2

(12) EUROPEAN PATENT APPLICATION

(21) Application number: 84101423.6

(22) Date of filing: 11.02.84

(51) Int. Cl.[3]: B 29 D 11/00
B 32 B 17/10, C 03 C 27/12

(30) Priority: 17.02.83 US 467427

(43) Date of publication of application:
29.08.84 Bulletin 84/35

(84) Designated Contracting States:
DE FR GB IT NL

(71) Applicant: PPG INDUSTRIES, INC.
One PPG Place
Pittsburgh Pennsylvania 15272(US)

(72) Inventor: Sare, Edward John
384 Comet Lane
Clinton Ohio 44216(US)

(72) Inventor: Lees, Donald Wales
P.O. Box 106 2366 Greensburg Road
Greensburg Ohio 44232(US)

(74) Representative: Sternagel, Hans-Günther, Dr. et al,
Patentanwälte Dr. M. Hann Dr. H.-G. Sternagel
Marburger Strasse 38
D-6300 Giessen(DE)

(54) **Laminated photochromic lens and method of laminating a photochromic lens.**

(57) Discloses a lens having a curved, glass core, an external surface of a solid plastic element, and a layer of an adhesive therebetween.

EP 0 116 924 A2

Patentanwälte
Dr. Michael Hann
Dr. H.-G. Sternagel
Marburger Strasse 38
D-6300 Giessen

(E-1708) St/Is

TITLE: LAMINATED PHOTOCHROMIC LENS AND METHOD OF LAMINATING A PHOTOCHROMIC LENS

APPLICANT: PPG INDUSTRIES, INC.
ONE PPG PLACE
PITTSBURGH, PENNSYLVANIA 15272 / U.S.A.

---

Plastic opthalmic lenses offer various advantages over glass opthalmic lenses, e.g., lower weight per unit of lens surface area, resulting in the ability to provide larger lenses having consumer acceptance, and advantageous ultimate physical properties. One problem encountered in plastic lenses is the present inability to provide a suitable photochromic agent therein. Photochromic agents are agents which darken on exposure to visible or ultraviolet light, especially ultraviolet light, and return to a clear condition in the absence of the actuating light. Photochromic glass materials as described, for example, in U. S. Patent 3,208,860 to Armistead et al and U. S. Patent 4,168,339 to Kerko et al have been used to fabricate opthalmic and sunglass lenses which provide photochromic effect under bright lighting conditions characterized by a high degree of ultraviolet radiation.

In U. S. Patent 4,268,134 to Gulati et al for Lightweight Laminated Photochromic Lenses, there is described a laminated lens of photochromic glass and plastic having a buried layer or core of the photochromic glass, surface layers of optically clear transparent polymer formed *in situ*, and adhesive bonding layers of a high strength, low elastic modulus thermoplastic polymer either formed *in situ* or applied in solution between the glass core and the transparent polymer surface layer. Gulati et al describe the physical characteristics of the adhesive bonding layer necessary obtain desirable laminate physical characteristics, e.g., mechanical durability and physical integrity, while avoiding physical delamination arising from the glass-transparent resin expansion mismatch. The coefficients of thermal expansion of most glasses fall below about 9 X $10^{-6}$ per degree centigrade. By way of contrast poly(diethylene glycol bis(allyl carbonate)), a transparent thermoset resin useful for plastic opthlamic lenses, has a coefficient of thermal expansion of about 100 X $10^{-6}$ per degree

centigrade. This order of magnitude difference can cause stress during fabrication and use which may induce fracture of the glass layer, and delamination of the glass and the surface layer. The delamination is particularly severe during manufacturing processes in which temperatures as high as 150°C may be encountered.

Gulati et al proposes a structure with a ratio of thickness of the plastic front surface layer to the thickness of the plastic back surface layers in the range of about 1 to 8 to about 8 to 1 at all peripheral portions of the lens within about 2 lens thicknesses of the edge, and the adhesive bonding layer is an adhesive having a tensile strength of at least 4000 psi, a shear strength of at least 2000 psi, and an elastic modulus less than 10,000 psi. Exemplary adhesive laminates disclosed by Gulati et al include polyurethanes either formed in situ, or deposited or applied from solution.

Gulati's production technique requires either in situ formation of the adhesive bonding layer on the glass sheet or deposition of the adhesive bonding layer from liquid solution onto the glass sheet, followed by simultaneous in situ polymerization of both transparent thermoset resin layers, i.e., both diethylene glycol bis(allyl carbonate) layers, carried out in contact with both adhesive bonding layers and, further requiring careful control of the temperature profile whereby to avoid bending stresses and meridianal stresses during cure. The cure of diethylene glycol bis(allyl carbonate) is characterized by approximately 11 to 14 percent shrinkage of the polymerizing diethylene glycol bis(allyl carbonate).

It has now been found that the stresses during polymerization and cure of the diol bis(allyl carbonate) may be substantially reduced if the surface layer is laminated to the glass core by the adhesive bonding layer when both the transparent plastic surface layer and the adhesive bonding layer are solid materials, preferably having a substantial absense of creep recovery at strains of from about 0.002 to about 0.01. This may be accomplished by utilizing preformed, thermoplastic sheets or films of

the adhesive and partially curing the surface layer or layers prior to lamination and completely curing the surface layer or layers thereafter. Thus, as herein contemplated, the thermoplastic adhesive is a preformed sheet, and the plastic surface layer or layers are applied to the thermoplastic sheets of adhesive bonding layer as a viscoelastic solid of, e.g., poly (diol bis(allyl carbonate) or poly (methyl methacrylate) having a substantial absence of creep recovery at strains from about 0.002 to about 0.01.

According to a further exemplification of the invention herein contemplated the surface layer or layers may comprise a diol bis(allyl carbonate) polymer of modified ultimate and thermal properties which polymer is laminated to the glass core as a cured, rigid polymer, thereby avoiding in situ polymerization. The ultimate properties and thermal properties may be modified by a dispersed polymer in the poly [diol bis(allyl carbonate)] network, e.g., a dispersed copolymer of an acrylic acid or an aliphatic acrylate and an allyl acrylate. Alternatively, the ultimate properties and the thermal properties may be modified by copolymerizing the diol bis(allyl carbonate), e.g., with multifunctional allyl cyanurates, multifunctional acrylate terminated polyurethanes, and the like.

According to a still further exemplification of the invention herein contemplated, it has been found that a solid surface layer, as a fully cured, transparent sheet, may be laminated to the glass core or sheet where the thermoplastic adhesive, e.g., the preformed, solid polyurethane thin sheet, film, or layer, has a combination of elastic properties, e.g., shear strength, tensile strength, elastic modulus, or coefficient of thermal expansion which avoid thermally induced delamination.

## Detailed Description Of The Invention

As herein contemplated, a glass laminate, such as a glass-plastic laminated lens, is provided. The laminate has a thin, transparent, organic polymeric layer, a thin glass core, and a thin thermoplastic adhesive therebetween. In one exemplification

the glass core is a photochromic glass core. The polymeric surface layer may be characterized as a preformed thermoplastic resin, as a polyacrylate, a polycarbonate, or a polyvinyl halide, or a preformed thermoset resin, e.g., containing polymerized diol bis(allyl carbonate). It is further characterized by its fracture resistant properties during lamination, which fracture resistant properties may be the result of a substantial absence of creep recovery at strains of from about 0.002 to about 0.01, or the presence of dispersed polymers within the thermoset resin, or the presence of copolymers which modify the ultimate properties or thermal properties of the surface layer.

The glass-plastic laminate may be a lens. The laminate may comprise a transparent polymeric front layer or element, a photochromic glass core, and a transparent polymeric back surface layer or element, with each transparent polymeric surface layer or element being bonded to the glass core by an adhesive bonding layer. Alternatively, the laminate may comprise a single transparent polymeric surface layer or element and a glass core, with the glass core being bonded to the transparent polymeric surface layer or element by an adhesive bonding layer. The polymeric surface layer may be on either the front surface layer or the back surface layer of the laminate. Most commonly it will be the back surface, i.e., the surface area remote from the incident light. The glass core may have a photochromic agent, an ultraviolet absorber, or an infrared absorber incorporated therein. A transparent polymeric surface layer may have a photochromic agent, an ultraviolet absorber, or an infrared absorber incorporated therein. Thus the core or a layer may contain a photochromic agent, and another layer may contain an ultraviolet absorber or an infrared absorber. However, where a core or a polymeric layer has an ultraviolet actuated photochromic agent incorporated therein or thereon, the layers or core between the ultraviolet actuated photochromic agent bearing element and the incident light source should be substantially transparent to ultraviolet light. As herein utilized, the front surface layer or element is that layer or element between the glass

core and the incident light, and the back surface layer or element is that layer or element that is remote from incident light.

According to one particularly preferred exemplification, the spherically curved lens is a laminated lens having a polymeric back surface layer and a photochromic glass core, with the photochromic glass core and the polymeric back surface layer being bonded together by an adhesive bonding layer, the glass core being between the incident light and the plastic surface layer.

The plastic surface layer and adhesive bonding layer on the back surface of the glass core, remote from the incident light, need not be transparent to ultraviolet radiation, and may, in fact, be absorbers of ultraviolet radiation. For example, the adhesive bonding layer and the polymeric back surface layer may have incorporated therein ultraviolet absorbers whereby to absorb ultraviolet radiation. Moreover, the adhesive bonding layer and the polymer back surface may have aromaticity incorporated therein. Alternatively or additionally, the back surface layer may have either an infrared absorber or an ultraviolet absorber or both incorporated therein.

Where the surface layer and adhesive bonding layer are between the glass core and the incident light, both the front surface layer and the adhesive layer should be substantially transparent to ultraviolet radiation, that is radiation in the range of 300 nanometers to 400 nanometers, whereby to allow ultraviolet actuated photochromic agents incorporated within the glass core to be effective.

The laminates herein contemplated may be prepared by applying a preformed, solid thin adhesive bonding layer to a surface of a glass core and applying the preformed, solid thin surface layer or element to the preformed, solid adhesive bonding layer. The adhesive bonding layer is applied to the glass core or layer as a preformed, solid, thermoplastic, polymeric material. The surface layer element is applied to the adhesive bonding layer as a solid thermoplastic material or a solid viscoelastic material. The solid material of the surface layer may contain diol bis

(allyl carbonate), either as the monomer, having a polymer dispersed therein as will be described herein below, or as a B-stage resin, or as a polymerized solid. Alternatively, it may contain a poly(acrylate), a poly (arylate), a polyvinyl(halide) a poly(carbonate), or a transparent poly(amide).

It is possible to effect lamination to only one surface of the glass core, or to both surfaces sequentially, as well as to both surfaces simultaneously, even to spherically curved glass cores, as herein contemplated, without giving rise to destructive bending stresses and meridianal stresses, and avoiding delamination and destruction of either the glass cores or the surface layers. This is because of the ultimate properties, the elastic properties, and the thermal dependency of these properties of the adhesive binding layer. As herein contemplated, for example, the adhesive binding layer has an elastic modulus of 1,500 to 2,300 pounds per square inch (100 percent elongation) to about 5,400 to 6,100 pounds per square inch (300 percent elongation) at minus 35°C to from about 280 to 400 pounds per square inch (100 percent elongation) to from about 400 pounds per square inch to 600 pounds per square inch (300 percent elongation) at 63°C. Exemplary thermoplastic adhesive binding agents are polyurethanes of the type described more fully hereinbelow. In spherically curved laminated lenses the adhesive bonding layer will typically have a thickness of from 0.002 inch to 0.04 inch, and preferably from 0.005 inch to 0.02 inch.

Additionally, various binding additives and treatments may be applied thereto, as for example, silane additives, or corona discharge treatment whereby to enhance the effect of the adhesive binding layer.

The glass core is a thin glass core, having a thickness of from about 0.005 to 0.100 inch, preferably from about 0.01 to about 0.050 inch and, more particularly, from about 0.015 to about 0.30 inch. In a preferred embodiment the glass core is photochromic.

The surface layer is an optically clear material. It may be provided by a thermoplastic resin, e.g., a polyacrylate such as

poly(methyl methacrylate), a polyarylate such as transparent, aromatic polyesters, e.g., those prepared from phthalic acids and bisphenols, polycarbonates, or poly(vinyl halides) such as polyvinyl chloride or polyvinyl fluoride. Alternatively, the surface layer may be a transparent poly(amide) or a thermoset resin such as polymer of a polyol(allyl carbonate). The polymer may be polymerized from a neat monomer, or from a monomer having a polymer dispersed therein. Moreover, as described hereinabove, the surface layer may be applied to the laminate as a fully cured, creep resistant material, as a deformable material characterized by the substantial absence of creep recovery, or as a thermoplastic. The deformable material may be a B-stage resin of partially polymerized diol bis(allyl carbonate) having a polymer dispersed therethrough, or a copolymer of a diol bis(allyl carbonate).

Diol bis(allyl carbonate) monomers which may be utilized in this invention are normally linear, liquid allyl carbonates, i.e., glycol bis(allyl carbonate) compounds, in which the allyl groups may be substituted at the 2 position with a halogen, notably chlorine or bromine, or a 1 to 4 carbon alkyl group, generally a methyl or ethyl group, and the glycol group may be an alkylene, alkylene ether, or alkylene polyether group having from 2 to 10 carbons and oxygens. These diol bis(allyl carbonate) monomers are represented by the formula:

$$R_1-O-\overset{\overset{O}{\parallel}}{C}-O-R_2-O-\overset{\overset{O}{\parallel}}{C}-O-R_3$$

where $R_1$ and $R_3$ are allyl or substituted allyl groups, and $R_2$ is as defined below. $R_1$ and $R_3$ are independently represented by the formula:

$$H_2C=\overset{\overset{R^1}{|}}{C}-CH_2-$$

where $R^1$ may be hydrogen, halogen, or a 1 to 4 carbon alkyl group. Specific examples of $R_1$ and $R_3$ include allyl, 2-chloroallyl, 2-bromoallyl, 2-iodoallyl, 2-fluorallyl, 2-methallyl, 2-ethylallyl, 2-isopropylallyl, 2-n-propylallyl, and 2-n-butylallyl groups. Most

commonly, $R_1$ and $R_3$ are allyl groups, $H_2C = CH - CH_2-$. Such compounds and methods for making them are disclosed in U. S. Patents 2,370,567 and 2,403,113.

Specific examples of $R_2$ are alkylene groups such as ethylene, trimethylene, methylethylene, tetramethylene, ethylethylene, pentamethylene, hexamethylene, 2-methylhexamethylene, octamethylene, and decamethylene groups, alkylene ether groups such as $-CH_2-O-CH_2-$, $-CH_2CH_2-O-CH_2CH_2-$, $-CH_2-O-CH_2-CH_2-$, and $-CH_2CH_2CH_2-O-CH_2CH_2CH_2-$, alkylene polyether groups such as $-CH_2-CH_2-O-CH_2CH_2-O-CH_2CH_2-O-CH_2CH_2-$ and $-CH_2CH_2-O-CH_2CH_2-O-CH_2CH_2-$ groups and alkylene carbonate groups such as $CH_2CH_2-O-CO-O-CH_2CH_2$ and $-CH_2CH_2-O-CH_2CH_2-O-CO-O-CH_2CH_2-OCH_2CH_2-$ groups. Most commonly, $R_2$ is $-CH_2CH_2-$, $-CH_2CH_2-O-CH_2CH_2-$, or $-CH_2CH_2-O-CH_2CH_2-O-CH_2CH_2-$.

Specific examples of diol bis(allyl carbonate) monomers useful in the invention herein contemplated include ethylene glycol bis(2-chloroallyl carbonate), diethylene glycol bis(2-methallyl carbonate), triethylene glycol bis(allyl carbonate), propylene glycol bis(2-ethylallyl carbonate), 1,3-propanediol bis(allyl carbonate), 1,3-butanediol bis(allyl carbonate), 1,4-butanediol bis(2-bromoallyl carbonate), dipropylene glycol bis(allyl carbonate), trimethylene glycol bis(2-ethylallyl carbonate), and pentamethylene glycol bis(allyl carbonate).

Commercially important diol bis(allyl carbonate) monomers which are useful in the invention herein contemplated are:

$$CH_2 = CH-CH_2-O-\overset{\overset{O}{\|}}{C}-O-CH_2-CH_2-O-CH_2CH_2-O-CH_2CH_2-O-\overset{\overset{O}{\|}}{C}-O-CH_2-CH = CH_2,$$

$$CH_2 = CH-CH_2-O-\overset{\overset{O}{\|}}{C}-O-CH_2CH_2-O-CH_2CH_2-O-\overset{\overset{O}{\|}}{C}-OCH_2-CH = CH_2,$$

and

$$CH_2 = CH-CH_2-O-\overset{\overset{O}{\|}}{C}-O-CH_2-CH_2-O-\overset{\overset{O}{\|}}{C}-O-CH_2-CH = CH_2.$$

While aliphatic diol bis(allyl carbonate) monomers are preferred, especially for those elements exposed to ultraviolet radiation, aromatic diol bis(allyl carbonate) monomers may be used

to form the transparent polymeric elements herein contemplated, especially elements where the glass core, e.g., a glass core containing an ultraviolet absorbing agent, or a glass core and a transparent polymeric element, one or both of which contain an ultraviolet absorbing agent, are interposed between the ultraviolet source and the element formed of aromatic diol bis(allyl carbonate).

According to an alternative exemplification herein contemplated, a pseudoplastic resin, i.e., a deformable solid, may be used to form the laminate. The pseudo plastic resin may be prepared from a composition of diol bis(allyl carbonate) and a polymer. The polymer is either soluble in the diol bis(allyl carbonate), swollen by the diol bis(allyl carbonate), or swollen by and partially soluble in the diol bis(allyl carbonate). The polymer should both be resistant to destruction by the peroxy initiators used to polymerize the diol bis(allyl carbonate), and not interfere therewith.

The polymer which is dispersed in the diol bis(allyl carbonate) may be a monofunctional homopolymer, or a copolymer of monofunctional monomers, or a copolymer of a monofunctional monomer and a difunctional monomer. Preferably the difunctional monomer has functional groups of high and low reactivity, e.g., a vinyl group and an allyl group, and the monofunctional monomer is a vinyl monomer. Preferably the diol bis(allyl carbonate) contains a viscosity increasing amount of the dispersed polymer, e.g., from about 2 to about 40 weight percent, basis diol bis(allyl carbonate), of methyl methacrylate-allyl methacrylate copolymer, and preferably from about 3 to 20 weight percent thereof.

Preferably the copolymer is a copolymer of (a) an acrylate, i.e., an acrylate ester or an acrylic acid, and (b) an ester of an acrylic acid and an allyl alcohol or substituted allyl alcohol having the formula:

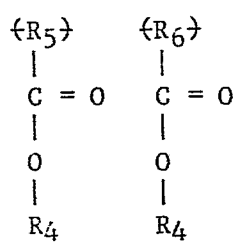

where $R_5-\overset{O}{\overset{\|}{C}}-OH$ and $R_6-\overset{O}{\overset{\|}{C}}OH$ independently are acrylic acids, as acrylic acid, methacrylic acid, ethyl acrylic acid, butyl acrylic acid, propyl acrylic acid, and higher acrylic acids; and $R_4OH$ is independently $H_2O$, methyl alcohol, ethyl alcohol, an allyl alcohol, or a substituted allyl alcohol, having the formula:

$$H_2C = \overset{R^4}{\overset{|}{C}}-CH_2-OH$$

where $R^4$ is chosen from the group consisting of hydrogen, halogen, and $C_1$ to $C_4$ alkyls. Most frequently $R_4OH$ is allyl alcohol,

$$H_2C = CH-CH_2OH,$$

and the other $R_4OH$ is water or ethyl alcohol, and

$$R_5\overset{O}{\overset{\|}{C}}OH \text{ and } R_6\overset{O}{\overset{\|}{C}}OH$$

are independently either acrylic acid,

$$CH_2 = CH-\overset{O}{\overset{\|}{C}}OH$$

or methacrylic acid

$$CH_2 = \underset{CH_3}{\underset{|}{C}}-\overset{O}{\overset{\|}{C}}OH$$

For example, the difunctional monomer may be allyl acrylate, allyl methacrylate, or the like, and the monofunctional monomer may be methyl acrylate, methyl methacrylate, ethyl acrylate, ethyl methacrylate, or the like. In this way there is provided a linear, minimally crosslinked, soluble, swellable polymer, with polymerization predominantly through the vinyl groups. Especially preferred is a copolymer of allyl methacrylate and methyl methacrylate.

One particularly desirable dispersed copolymer is a copolymer of methyl methacrylate and allyl methacrylate. The copolymer typically contains from about 80 to about 99 weight percent methyl methacrylate and balance allyl methacrylate. Especially preferred is a copolymer containing up to 95 weight percent methyl methacrylate, balance allyl methacrylate, and an apparent molecular weight of 10,000 to 1,000,000 determined by inherent viscosity versus poly(methyl methacrylate).

Especially preferred copolymers with olefinic unsaturation, i.e., copolymers of an acrylate and an allyl acrylacrylate, are those having a viscosity average macromolecule molecular weight above about 10,000 and especially from about 100,000 to about 600,000. These copolymers are characterized by a low rate of solubilization in and swelling by the diol bis(allyl carbonate) monomer. As a consequence, in order to obtain high levels thereof in the final polymerizate, e.g., above about 8 to 15 weight percent, they are usually first solubilized in or swollen by a suitable solvent, e.g., methylene chloride, and thereafter admixed with diol bis(allyl carbonate) and the solvent subsequently recovered therefrom.

The properties of the pseudoplastic resin and of the resulting hard polymerizate are functions of the polymer and of the concentration thereof. For example, at concentrations below about 5 weight percent, poly(95% methyl methacrylate-5% alkyl methacrylate) of molecular weight approximately 500,000, the system of diethylene glycol bis(allyl carbonate)poly(95% methyl methacrylate-5% allyl methacrylate), requires partial cure to yield a fabricable resin, while at concentrations above about 10 weight percent poly(95% methyl methacrylate-5% allyl methacrylate) of molecular weight of approximately 500,000, the system of diethylene glycol bis(allyl carbonate)-poly(95% methyl methacrylate-5% allyl methacrylate) is pseudoplastic upon formation, without cure. At dispersed copolymer concentrations of 5 to 10 weight percent, the system of diethylene glycol bis(allyl carbonate)-poly (95% methyl methacrylate-5% allyl methacrylate) is a thick, syrupy composition approaching thermoplasticity.

The polymer may be added directly to the diol bis(allyl carbonate) monomer. Alternatively, the polymer may be added to an organic solvent, e.g., methylene chloride, whereby to form a solution. Thereafter, the diol bis(allyl carbonate) monomer is added to the solution, and the solvent driven off, e.g., by distillation, evaporation, boiling, or the like.

Especially preferred solvents are those solvents having a solubility parameter of about 9.0 to about 10.0 (calories/cubic centimeter)$^{-0.5}$, where the solubility parameter is the square root of the cohesive density, as described in F. Rodriquez, Principles of Polymer Systems, McGraw-Hill Book Co., New York, N.Y., (1970), and Beerbower, Kaye, and Pattison, Chem. Engr., December 18, 1967, page 118.

Exemplary solvents include halogenated hydrocarbons, such as methylene chloride, chloroform, dichlorethylene, ethylene dichloride, tetrachloroethane, tetrachloroethylene, trichloroethane, trichloroethylene, aromatics, such as benzene, nitrobenzene, orthodichlorobenzene, styrene, and chlorobenzene, and hydrocarbons. Alternatively, other solvents, such as benzaldehyde, carbon disulfide, chlorobromomethane, cyclohexanone, ethyl chloroformate, diethylene glycol, diphenyl, turpentine, cyclohexane, isooctane, and nitrobenzene may be used.

The amount of solvent is generally from about one to about twenty-five times the weight of polymer, and generally from about four to about twenty times.

Alternatively the diol bis(allyl carbonate) may be copolymerized with a material that modifies any or all of the elastic properties, ultimate properties, or thermal properties of the resulting polymerizate. Exemplarly comonomers include urethanes having terminal acrylate functionality, and allyl S-triazines.

Exemplary urethanes include high molecular weight monomers, oligomers, and prepolymers, and polymers having a molecular weight below about 3500, and characterized by internal polyurethane bonds and terminal acrylate functionality. Copolymerizates of diol bis(allyl carbonate) with a high molecular weight monomer, oligomer,

or low molecular weight polymer or prepolymer having internal polyurethane functionality and terminal acrylate functionality have superior ultimate properties and elastic properties than equivalent polyol(allyl carbonate) homopolymer.

The surface layers herein contemplated may be prepared by adding an effective amount of a material having internal polyurethane functionality and terminal acrylate functionality to a diol bis(allyl carbonate) monomer, whereby to provide a liquid composition of a major portion of diol bis(allyl carbonate) monomer and a minor portion of the material having internal polyurethane functionality and terminal acrylate functionality. The resulting ing liquid composition is polymerized to yield the outer surface layer, e.g., by free radical initiated polymerization through the allyl and acrylate functionality to provide a copolymerizate of a major portion of diol bis(allyl carbonate) and a minor portion of the material having internal polyurethane functionality, i.e., polyurethane material.

As described in commonly assigned U. S. Patent 4,360,653 of Stevens et al for Polymerizate of (Allyl Carbonate) and Aliphatic Polyurethane Having Acrylic Unsaturation, an effective amount of the acrylated polyurethane material means an amount sufficient to provide a measurable enhancement of impact strength. This is at least about 3 weight percent, and generally above about 10 weight percent. However, the amount should be below about 50 weight percent and preferably below about 40 weight percent in order to retain the desired optical properties and chemical resistance of the diol (allyl carbonate). It has been found that a loading of in excess of about 10 weight percent of the terminal acrylate polyurethane provides a significant increase in average impact strength relative to that of the diol (allyl carbonate) homopolymerizate, while loadings of polyurethane with terminal acrylate functionality above about 20 to 30 weight percent provide an even higher increase in the impact strength relative to that of the polyol(allyl carbonate) homopolymerizate while retaining optical transparency and clarity.

However, amounts of the acrylate terminated polyurethane above about 40 to 50 weight percent should be avoided inasmuch as at levels of the acrylate terminated polyurethane above about 40 to 50 weight percent, basis total organics, the chemical resistance of the polymerizate begins to decline relative to that of the diol (allyl carbonate). Nevertheless, higher levels of acrylate terminated polyurethane may be utilized where chemical resistance is not essential.

The terminally acrylic polyurethanes herein contemplated as a copolymer with diol bis(allyl carbonate), including dithiocarbamyl esters, as will be described more fully hereinbelow, preferably have a molecular weight of from about 350 to about 3500, and preferably from about 500 to about 2000. Higher molecular weight terminally acrylic polyurethanes do not appear to provide sufficient acrylate activity for the degree of polymerization and cross linking desired while terminally acrylic polyurethanes having a molecular weight below about 300 do not appear to offer sufficient molecular weight or polyurethane functionality to provide the desired enhancement of the physical properties of the resulting polymerizate.

The polyurethanes having terminal acrylic groups which can be copolymerized according to this invention are characterized by terminal acrylate groups, i.e., acrylic acid groups, methacrylic acid groups, ethyl acrylic acid groups, methyl acrylate groups, methyl methacrylate groups, ethyl methacrylate groups, or the like, and internal carbamate bonds, including dithiocarbamate bonds.

Whenever the terms "polyurethane having terminal acrylate functionality", "acrylated urethane oligomer", "acrylated carbamyl ester", or "polyacrylate having internal carbamate bonds", are used herein with respect to the diol bis(allyl carbonate) copolymer, they are used interchangeably and synonymously.

Whenever the terms "urethane", "carbamate", and "carbamyl" are used herein with respect to the diol bis(allyl carbonate) copolymer, they are intended to interchangeably and synonymously refer to the sulfur analogues, unless the contrary shall be clearly indicated by the context.

The polyurethanes having terminal acrylate functionality which can be copolymerized with the diol bis(allyl carbonate) to yield the rigid outer surface or lens according to this invention are normally liquid, aliphatic diacrylate, triacrylate, and tetra acrylate polyurethanes.

According to one exemplification herein contemplated, the polyacrylate having internal polyurethane, including dithiocarbamate, function ality has the formula:

(I)

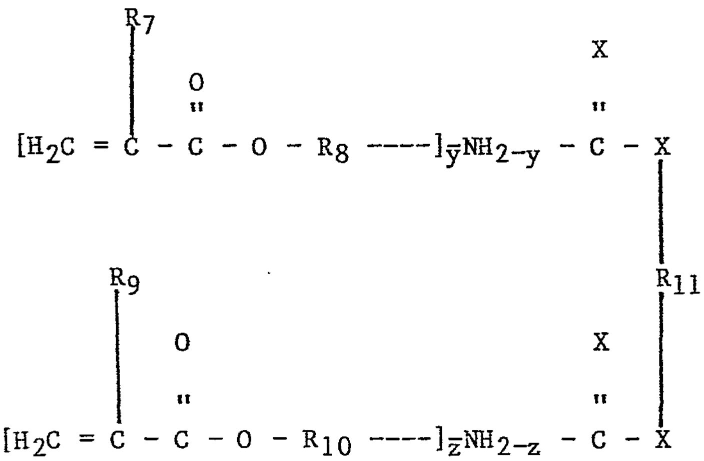

while according to an alternative exemplification, the polyacrylate having internal polyurethane functionality has the formula:

(II)

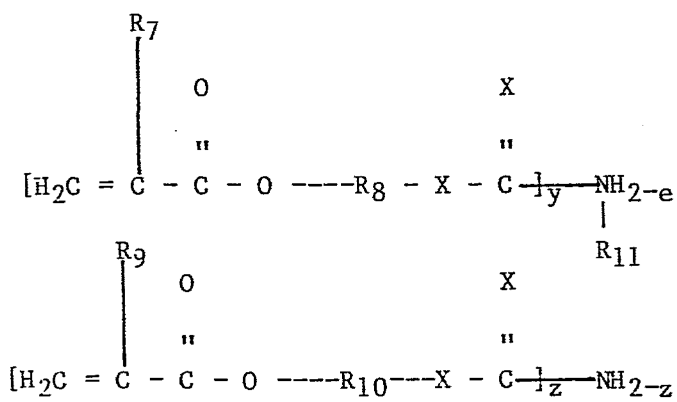

i.e.,

(IIa)

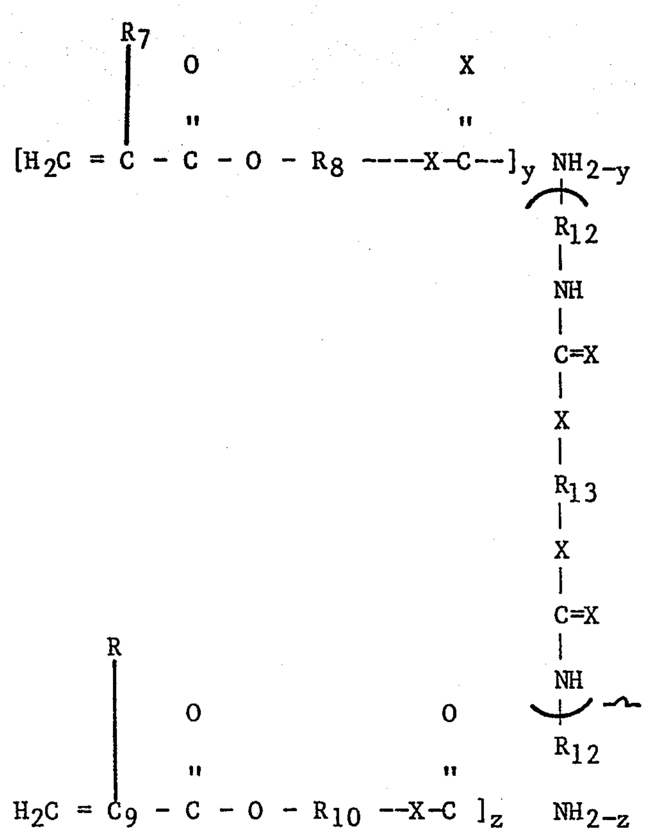

where omega is such as to provide the desired molecular weight.

In Formulae (I), (II), and (IIa) $R_7$ and $R_9$ are independently chosen from the group consisting of -H and $-CH_3$, $R_8$ and $R_{10}$ are independently chosen from the group consisting of $C_1$ to $C_{10}$ alkyls, including branched alkyls. Most commonly, $R_8$ and $R_{10}$ are $-CH_2CH_2-$, y and z are independently 1 or 2, X is chosen from the group consisting of oxygen and sulfur. In Formula I, $R_{11}$ is chosen from the group consisting of alkylene groups, alkylene ether groups, alkylene polyether groups, alkylene carbonate groups, aromatic groups, polyurethane groups, and polythiourethane groups. In Formula II, $R_{11}$ is derived from the reactions of polyols with aliphatic and aromatic polyisocyanates, i.e., $R_{11}$ is a polyurethane. In Formula IIa, $R_{12}$ is derived from the diisocyanate, and $R_{13}$ is independently a $C_2$ to $C_{10}$ alkylene group derived from the diol.

According to a further embodiment of the exemplification where the diol bis(allyl carbonate) is copolymerized to enhance the elastic properties, ultimate properties, or thermal properties, the copolymer may be an allyl S-triazine.

Allyl S-triazine has the formula:

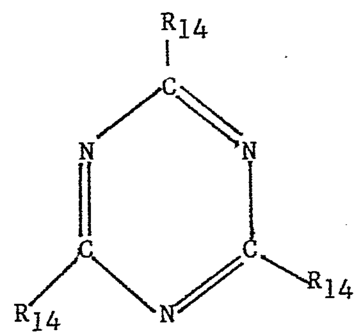

where the $R_{14}$'s are independently chosen from the group consisting of -H, and $-OCH_2CH=CH_2$ with at least one $R_{14}$ being an allyl group. Most commonly the $R_{14}$'s are $-OCH_2CH=CH_2$, and the trifunctional monomer triallyl cyanurate is copolymerized with the diol bis(allyl carbonate).

The surface layers, e.g., the spherically curved, transparent, polymeric layers, herein contemplated may be prepared by adding an effective amount of an allyl S-triazine, e.g., triallyl cyanurate to a diol bis(allyl carbonate) monomer whereby to provide a liquid composition of an effective amount of the allyl S-triazine and the balance diol bis(allyl carbonate), i.e., a minor portion of allyl S-triazine and a major portion diol bis(allyl carbonate).

By an effective amount of allyl S-triazine is meant an amount sufficient to provide a measurable enhancement of impact strength or heat distortion temperature of the copolymer of allyl S-triazine and diol bis (allyl carbonate), i.e., at least about 2 weight percent in the case of triallyl cyanurate. However, preferably the amount of allyl S-triazine should be below 40 weight percent whereby to retain the desirable optical properties of the diol bis(allyl carbonate).

According to a still further exemplification, the transparent, organic polymeric resin may be a thermoset resin of diol bis(allyl carbonate), an unsaturated polyester, and an unsaturated monomer, e.g., an unsaturated ester, as described in the commonly assigned U. S. Patent 4,139,578 of Baughman et al for Bis(Allyl Carbonate) Compositions and Polymerizates Therefrom.

As therein described, the polymerizate contains from about 30 to 55 weight percent bis(allyl carbonate), from about 20 to 55 weight percent polymerizable ethylenically unsaturated polyester, and from about 5 to 30 weight percent of unsaturated monomer, basis weight of the total composition.

Suitable unsaturated polyesters include poly(ethylene maleate), poly(ethylene fumarate), poly(ethylene maleate adipate), poly(ethylene maleate succinate), poly(propylene maleate), poly-(tetramethylene maleate adipate), poly(ethylene maleate succinate adipate) and poly(ethylene maleate glutarate).

The ethylenically unsaturated polyesters useful in the present invention have a number average molecular weight of less than 2000, preferably from about 1,000 to about 2,000 and more preferably from about 1,000 to about 1,500. The unsaturated polyester will typically have a hydroxyl number of between 56 and 112 and an acid number of from less than 1 to about 50, preferably from about 10 to about 30.

Unsaturated dicarboxylic acids used to prepare the above-described unsaturated polyesters are typically the $C_4$-$C_6$ unsaturated dicarboxylic acids, such as, maleic, fumaric, itaconic, mesaconic, citraconic, ethylmaleic, mono- and dichloro maleic, mono- and dibromo maleic, glutaconic and ethylfumaric acids or anhydrides thereof. Preferably, the unsaturated dicarboxylic acids are the alpha-unsaturated, alpha-beta dicarboxylic acids or their anhydrides, such as maleic and fumaric acids, and the alkyl, e.g., methyl, ethyl, or halogenated, e.g., chloro-, bromo- derivatives thereof. Mixtures of the aforementioned unsaturated acids and of the acids and anhydrides can, of course, be used in the preparation of the unsaturated polyester.

Polyhydric alcohols e.g., glycols, that can be used to produce the above-described unsaturated polyesters are aliphatic alcohols containing two or more hydroxy groups. Typical of the polyhydric alcohols used to prepare unsaturated polyester resins are glycols containing from 2 to about 10 carbon atoms such as the polymethylene glycols in the series from ethylene glycol to decamethylene glycol. Also included are the branched alcohols such as are present in the propylene and butylene glycols. Preferably, the glycols contain from 2 to 6 carbon atoms and will be hydroxy terminated. Also useful are the polyethylene glycols in the series from diethylene glycols to triethylene glycol, and the polypropylene glycols, e.g., dipropylene glycol and tripropylene glycol. Particularly useful are diethylene and triethylene glycol. Most preferred are glycols containing from 2 to 4 carbon atoms, i.e., ethylene glycol, 1-3-propylene glycol, and 1,4-butane diol.

The preferred polymerizable unsaturated polyesters used in the polymerizable liquid compositions are the so-called "linear polyesters," i.e., those which have little cross-linking in the polyester molecules, as evidenced by the fact that such polyesters are soluble in solvents such as acetone.

Suitable unsaturated monomers include liquid lower alkyl esters of unsaturated carboxylic acids, vinyl esters of the lower members of saturated monocarboxylic acids, and styrene.

The lower alkyl esters of unsaturated acids are typically $C_1$-$C_4$, preferably $C_1$-$C_2$, alkyl esters of (1) unsaturated $C_1$-$C_2$ alkyl alpha substituted monocarboxylic acids and (2) unsaturated $C_4$-$C_6$ dicarboxylic acids. Examples of alkanols used to prepare such esters include methanol, ethanol, propanol, isopropanol and the butanols. Preferably, straight chain alkanols are used.

As the unsaturated dicarboxylic acid, there can be used any of the unsaturated dicarboxylic acids described herein with respect to the preparation of the unsaturated polyester component, e.g., maleic, fumaric, itaconic, citraconic, ethylmaleic, and mesaconic dicarboxylic acids. As the unsaturated alkyl alpha substituted monocarboxylic acids there can be mentioned methacrylic

acid and 2-methylenebutyric acid. The methacrylic acid esters, e.g., methyl methacrylate, are economically preferred.

Vinyl esters of lower members of saturated monocarboxylic acids can also be used as the unsaturated monomer. In particular, there are contemplated the vinyl esters of $C_1$-$C_3$ saturated monocarboxylic acids, e.g., formic, acetic and propionic acids, such as vinyl acetate.

Examples of unsaturated monomers contemplated herein include: methyl methacrylate, ethyl methacrylate, butyl methacrylate, isobutyl methacrylate, dimethyl maleate, diethyl maleate, methyl ethyl maleate, dimethyl fumarate, diethyl fumarate, methyl ethyl fumarate, vinyl acetate, vinyl formate, vinyl propionate, etc. Dimethyl maleate and diethyl fumarate are preferred.

While the transparent, polymeric surface element has been described with respect to poly(allyl carbonate) polymerizates, it may be an analagous poly(vinyl carbonate) polymerizate, e.g.:

$$CH_2 = CH\text{-}O\text{-}\overset{O}{\overset{\|}{C}}\text{-}O\text{-}R_2\text{-}O\text{-}\overset{O}{\overset{\|}{C}}\text{-}O\text{-}CH\text{-}CH_2,$$

where $R_2$ is as defined above, an analogous poly(acrylyl carbonate) polymerizate, e.g.:

$$CH_2 = CH\text{-}\overset{O}{\overset{\|}{C}}\text{-}O\text{-}R_2\text{-}O\text{-}\overset{O}{\overset{\|}{C}}\text{-}O\text{-}CH = CH_2,$$

where $R_2$ is as defined above, or an analogous poly(acrylate) polymerizate, e.g.:

$$CH_2 = CH\text{-}\overset{O}{\overset{\|}{C}}\text{-}O\text{-}R_2\text{-}O\text{-}\overset{O}{\overset{\|}{C}}\text{-}CH = CH_2,$$

as described hereinbelow, where $R_2$ is as defined herein, and interpolymers of two or more of allyl carbonates, vinyl carbonates, acrylyl carbonates, and acrylates.

Acrylate monomers which may be utilized in this invention to provide the transparent, polymeric surface element include acrylic acids, e.g., acrylic acid, $CH_2$=CH-CO-OH, and methacrylic acid, $CH_2$=C($CH_3$)-CO-OH; acrylate esters, e.g., ethyl acrylate, $CH_2$=CH-CO-$OCH_2CH_3$, and methyl methacrylate, $CH_2$=C($CH_3$)-CO-$OCH_3$. Alternatively, multifunctional acrylates may be utilized in this invention, e.g.,

$CH_2=CH-CO-O-R_2-O-CO-CH=CH_2$;

$CH_2=C(CH_3)-CO-O-R_2-O-CO-CH=CH_2$; and

$CH_2=C(CH_3)-CO-O-R_2-O-CO-C(CH_3)=CH_2$,

where $R_2$ is chosen from the group consisting of aryl groups and alkylene groups such as ethylene, trimethylene, methylmethylene, tetramethylene, ethylethylene, pentamethylene, hexamethylene, 2-methylhexanethylene, octamethylene, and dexamethylene groups, alkylene ether groups such as $-CH_2-O-CH_2-$, $-CH_2-O-CH_2CH_2-$, $-CH_2CH_2-O-CH_2CH_2-$, $-CH_2CH_2CH_2-O-CH_2CH_2CH_2-$ groups, alkylene polyether groups, such as $-CH_2CH_2-O-CH_2CH_2-O-CH_2CH_2-$ and $-CH_2CH_2-O-CH_2CH_2-O-CH_2CH_2-O-CH_2CH_2-$ groups, and alkylene carbonate groups, such as $-CH_2CH_2-O-CO-O-CH_2CH_2-$, and $-CH_2CH_2-O-CO-O-CH_2CH_2-O-CO-O-CH_2CH_2-$. Most commonly $R_2$ for diacrylates is $-CH_2CH_2-$, $-CH_2CH_2-O-CH_2CH_2-$, and $-CH_2CH_2-O-CH_2CH_2-O-CH_2CH_2-$.

Additionally, the transparent, polymeric surface element may be an interpolymer of monofunctional acrylates, e.g., an interpolymer of ethyl acrylate and methyl methacrylate, or an interpolymer of monofunctional acrylates and difunctional acrylates, as an interpolymer of ethyl acrylate, methyl methacrylate, and decamethylene diacrylate.

In the alternative exemplification described hereinabove, where the transparent, polymeric surface element is a thermoplastic polyacrylic, the surface element may be extruded, injection molded, or the like into the desired shape, and thereafter laminated, with the solid, precast adhesive bonding layer onto one or both surfaces of the glass core.

According to a still further exemplification of this invention, the transparent, polymeric surface element may be a polyarylate, i.e., the thermoplastic polymeric esters of bisphenols and phthallic acids.

Alternatively, the transparent, polymeric surface element may be a heterochain polycarbonate.

According to a still further exemplification the transparent, polymeric surface may be formed of a transparent polyamide, e.g., amorphous nylon.

As described in U. S. Patent 4,268,134 to Gulati et al for Lightweight Laminated Photochromic Lenses high bond stresses and hoop stresses are created by different coefficients of thermal expansion of the glass core and the plastic surface layer, necessitating an adhesive bonding layer between the glass core and the plastic surface layer whereby to reduce meridianal forces applied to the glass core. As thus described the adhesive bonding layer has a tensile strength of at least 4000 pounds per square inch, a shear strength of at least 2000 pounds per square inch, and an elastic modulus of less than 10,000 pounds per square inch.

According to the invention herein contemplated the thermal properties of the adhesive bonding layer, including the thermal dependencies of the ultimate properties, provide low temperature pliability so that the laminate is resistant to thermal shock, e.g. when going from temperatures below about 0°C or even below about -17°C to temperatures above about 25°C or even above 100°C. Additionally, the thermal properties, including the thermal dependencies of the ultimate properties, are believed to permit the lamination of precast transparent outer elements to glass with the precast solid adhesive bonding layer herein contemplated. In this way the use of adhesive solutions in the lamination process is avoided.

Additionally, for optical and opthalmic applications, the adhesive bonding layer should have optical clarity, low haze, maximum light transmission, and sufficient ultraviolet transmission to allow the photochromic agent, if any, in the glass core, to function effectively. The adhesive bonding layer is above about 0.002 inch thick, and preferably from about 0.005 inch thick to about 0.02 inch thick.

Exemplary adhesive bonding materials include polyurethanes, e.g., polyesterurethanes, polyetherurethanes and polycarbonateurethanes, and poly(vinyl butyral)s. Preferably, the adhesive bonding layer closest to the incident light source, is a polyurethane that is transparent to ultraviolet radiation as defined hereinabove, whereby to allow ultraviolet activation of the photochromic

materials within the glass core. For this reason the diisocyanate is an aliphatic diisocyanate compound. Preferred are cycloaliphatic compounds, especially dinuclear compounds bridged by an isopropylidene group or an alkylene group of 1 to 3 carbon atoms. Among the aliphatic diisocyanate that can be used are hexamethylene diisocyanates. Among the cycloaliphatic diisocyanates which can be employed are 4,4'-methylene-bis-(cyclohexyl dissocyanate), hydrogenated toluene diisocyanate, 4,4'-isopropylidene-bis(cyclohexyl isocyanate), 1,4-cyclohexyl diisocyanate, 4,4'-dicyclohexyl diisocyanate, 2,2,4-trimethylhexamethylene diisocyanate (TMDI); and 3-isocyanato methyl-3,5,5-trimethylcyclohexyl diisocyanate (IPDI). Mixtures can be employed to include minor amounts of other diisocyanates, such as toluene diisocyanate, diphenyl methane diisocyanate (MDI) and other aromatic diisocyanates providing that the amount employed is carefully controlled to avoid yellowing, translucence, reduced impact resistance, and ultraviolet absorbance.

The most preferred cycloaliphatic diisocyanate is 4,4'-methylene-bis-(cyclohexyl isocyanate) and is commercially available in different stereoisomer ratios. The product sold by duPont Company under the trademark "Hylene W" has a stereoisomer content of 19 to 21 percent trans, trans, 17 to 18 percent cis, cis, and 62 to 64 percent cis, trans. The total ratio is 55 percent trans and 45 percent cis. The diisocyanate may also contain a minor amount of monoisocyanate such as between about 0.27 and 0.40 percent and has a total acidity (as HCl) between about 0.001 and 0.002 percent by weight and an isocyanate content of about 99.8 percent of the theoretical. In the most preferred compositions of the invention, the diol reacted with this diisocyanate and polyester is 1,4-butanediol. The same diisocyanate was formerly offered commercially by Allied Chemical Company as "Nacconate H-12" but in a different stereoisomer ratio of 70 percent total trans, and 30 percent total cis (the proportion which is cis, cis; trans, trans and cis, trans is not known). With this diisocyanate, the diol which is reacted with the polyester and diisocyanate should be 1,3-butanediol or other unsymmetrical or branched diol or a translucent product is likely to result. Thus, when the total ratio of

trans to cis is high, a branched or unsymmetrical diol such as 1,3-butanediol should be employed to avoid the formation of translucent urethanes although they may have exceptional impact-resistant properties.

The preferred urethanes of the invention can be characterized as plastomers, that is, they are elastoplastic and thus do not snap back as a true elastomer when stressed. In addition, they are optically clear when used in laminates in thin sections, e.g., from less than about 10 to 60 mils, flexible and essentially non-adhesive at room temperature. They can also be described as being leathery, thermoplastic polymers that generally have a relatively constant Gehman modulus at between about -20°C. and 50°C. of 1 X $10^7$ and 1 X $10^{9.5}$. The Gehman modulus is measured according to ASTM-D 1053-65. The Gehman modulus should be taken within a few days or not more than a month after the polyurethane sheet is formed as the Gehman modulus may change upon aging. The preferred laminates are resistant to shock and impact and, when incorporated as part of a laminate, e.g., a glass-thermostat resin laminate, impart penetration resistance to the laminate over a wide temperature range. These properties are provided by polyester polyurethanes, polycarbonate polyurethanes and polyether polyurethanes.

Polyester compositions useful in preparing polyesterurethanes that can be used to prepare the above-described laminated articles are hydroxy-terminated polyesters having a number average molecular weight of between about 500 and about 5000, particularly between 750 and 4000 and, more particularly, between 1000 and 3300. More preferably, the polyesters are aliphatic, essentially linear polyesters having a number average molecular weight of between about 1000 and about 3300, which are prepared by esterification of an aliphatic dicarboxylic acid, or anhydride thereof, with an aliphatic polyhydric alcohol, e.g., an aliphatic diol. The number average molecular weight of the polyester compositions useful in the present invention can be determined by hydroxyl end group analysis and by the following formula:

$$\text{No.Ave.Mol.Wt.} = \frac{\text{(functionality of the polyester)(56.1)(1000)}}{\text{hydroxyl (OH) number of the polyester}}$$

As used herein, the term "polyester" is intended to include polylactones, e.g., polycaprolactones and polyvalerolactones, which can be prepared by polymerizing a lactone, such as epsilon caprolactone and deltavalerolactone, in the presence of minor amounts of difunctional active hydrogen compounds, such as water or a low molecular weight glycol, e.g., 1,4-butane diol.

Aliphatic dicarboxylic acids suitable for preparing polyester compositions useful in the present invention can be represented by the formula:

$$HOOC - R' - COOH$$

wherein R' is an alkylene radical containing from 2 to 12 and preferably from 4 to 8 carbon atoms inclusive. Thus, the dicarboxylic acids contain from 4 to 14 and preferably from 6 to 10 carbon atoms. Examples of such dicarboxylic acids include: succinic acid, glutaric acid, adipic acid, pimelic acid, suberic acid, azelaic acid, and sebacic acid. The corresponding anhydrides can also be used. Adipic and azelaic acid are preferred. Mixtures of dicarboxylic acids also can be used. Unsaturated acids, such as maleic, fumaric, and acetylenic dicarboxylic acids can be employed.

The polyhydric alcohols utilized in the preparation of the polyester compositions of the present invention are preferably aliphatic alcohols containing at least two, and preferably only two hydroxy groups, e.g., straight-chain glycols, containing from 2 to 15 and preferably from 4 to 8 carbon atoms inclusive. The glycols contain hydroxyl groups preferably in the terminal positions and straight chain diols can be represented by the formula:

$$HO-(CH_2)_x-OH$$

wherein x is a number ranging from 2 to 15. Preferred is 1,4-butanediol, i.e., wherein x is 4.

Examples of polyhydric alcohols of from 2 to 15 carbon atoms inclusive which can be used to form the polyester include: ethylene glycol, diethylene glycol, triethylene glycol, tetraethylene glycol, 1,3-propanediol, 1,3-butanediol, 1,4-butanediol, 1,5-pentanediol, 2,2-dimethyl propane diol, 1,6-hexanediol, 1,7-heptanediol, 1,8-octanediol, 1,10-decanediol, and unsaturated diols

such as 2-butene-1,4-diol, 2-butyne-1,4-diol and the like. Mixtures of polyhydric alcohols, e.g., ethylene glycol and propylene glycol, can be employed. Only small amounts, if any, of trifunctional alcohols, such as glycerol or trimethylol propane should be present in order to decrease the possibility of extensive cross-linking since the preferred polyesters are essentially linear. Preferably, no trifunctional alcohols are present.

Examples of preferred polyesters include poly(1,4-butylene adipate), poly(1,4-butylene succinate), poly(1,4-butylene glutarate) poly(1,4-butylene pimelate), poly(1,4-butylene suberate), poly(1,4-butylene azelate), poly(1,4-butylene sebacate), and poly(epsilon caprolactone).

The polyester compositions useful in the present invention can, as indicated, have a number average molecular weight of between about 500 and 5000. It is understood that this is a number average and that the polyester composition is composed of a great number of different molecules of varying length, i.e., from the free glycol to a high molecular weight polyester, in a normal distribution. For example, a poly(1,4-butylene adipate) of 2000 number average molecular weight will have molecular species contained in it ranging from unreacted residual 1,4-butanediol (molecular weight 90) to poly(1,4-butylene adipates) of 5000 molecular weight or higher; but, with the principal constituents of the composition (in weight) being in the near vicinity of 2000 molecular weight to achieve that number average molecular weight. Additionally, the polyester compositions may be polycarbonate polyesters.

Polyether compositions useful in preparing polyetherurethanes that can be used to prepare the above-described laminated articles are hydroxy terminated polyethers having a number average molecular weight of between about 150 and about 5000, particularly between about 200 and about 4000, and more particularly between about 400 and about 3000. These polyethers are generally prepared by the reaction of alkylene oxides with an initiator having active hydrogens in its structure.

Suitable polyethers include poly(oxyethylene) glycols, which may be prepared, for example, by the sodium hydroxide catalyzed reaction of ethylene oxide with water, ethylene glycol, or diethylene glycol; poly(oxypropylene) glycols, which may be prepared, for example, by the base catalyzed addition of propylene oxide to propylene glycol or to dipropylene glycol; block copolymers of poly(oxypropylene) and poly(oxyethylene); poly(oxytetramethylene) glycols, prepared by the Lewis acid catalyzed polymerization of tetrahydrofuran; and poly(oxybutylene) glycols prepared by the base catalyzed reaction of either 1,2-butylene oxide or 2,3-butylene oxide with a glycol.

Especially preferred polyethers are poly(1,4-oxybutylene) glycols having a molecular weight of about 1000 to 2000. These poly(1,4-oxybutylene) glycols may be prepared by the Lewis acid catalyzed polymerization of tetrahydrofuran.

The preferred polyester polyurethanes are prepared in a manner such as to obtain a random distribution of segments. For example, all the reactants are reacted simultaneously, i.e., the one-step bulk polymerization method, and the reactants are chosen or a catalyst used to impart substantially equal reactivities to the reactants. Consequently, the polyesterurethane will have a random distribution of hard and soft segments.

The simple segmented polyurethanes of the present invention are composed of two segments: (a) a hard segment which is composed of the reaction product of the low molecular weight active hydrogen compound, e.g., the aliphatic diol, and the diisocyanate; and (b) a soft segment which is composed of the reaction product of the polyesterdiol or polyetherdiol and the diisocyanate. The hard and soft segments are bonded together through the urethane linkage. Generally, the higher the molecular weight of the polyesterdiol or polyetherdiol, the higher the weight percent hard segment of the polyurethane. The preferred polyurethanes of the present invention and those that are useful for the preparation of penetration (impact) resistant laminates will have a weight percent hard segment of from about 10 to about 45 percent, preferably from 15 to

36 percent. More particularly, when the polyetherdiol or polyesterdiol has an average molecular weight of about 2000, the hard segment of the polyurethane will range preferably from about 15 to about 30 percent. The weight percent hard segment (H.S.) can be calculated from the expression:

$$WT.\%H.S = \frac{[(\text{Moles of low molecular weight active hydrogen compound}) \times (\text{Molecular weight of low molecular weight active hydrogen compound} + \text{molecular weight of diisocyanate})] \times 100}{\text{Total Wt. of Reactants}}$$

The preferred polyurethanes of the invention are amorphous and will generally have an average molecular weight, as calculated from inherent viscosity measurements, of between about 10,000 and about 100,000 and preferably between about 20,000 and about 65,000.

Exemplary polyesterurethanes containing from about 25 to about 30 weight percent hard segment have an elastic modulus at -35°C of about 1,500 to about 2,300 pounds per square inch at 100 percent elongation, about 3,500 to 4,500 pounds per square inch at 200 percent elongation, and about 5,400 to about 6,100 pounds per square inch at 300 percent elongation; an elastic modulus at 25°C of 800 to 1,000 pounds per square inch at 100 percent elongation, 1,200 to 1,600 pounds per square inch at 200 percent elongation, and 1,800 to 3,000 pounds per square inch at 300 percent elongation; an elastic modulus at 63°C of about 280 to 420 pounds per square inch at 100 percent elongation, 350 to 525 pounds per square inch at 200 percent elongation, and 400 to 600 pounds per square inch at 300 percent elongation; an ultimate tensile strength of about 5,700 to 9,000 pounds per square inch and 450 to 500 elongation at 23°C. In this way there can be provided three layer laminates of hard resin-adhesive-glass and five layer laminates of hard resin-adhesive-glass-adhesive-hard resin that are characterized by the substantial absence of destructive levels of bending stresses and meridianal stresses, and the presence of good thermal shock resistance.

According to one exemplification of the invention herein contemplated, a five layer laminated lens is produced having a 0.02 inch thick, 3 inch diameter, plus 6.00 base curvature photochromic glass core, a .015 inch thick, 3 inch diameter, polyetherurethane adhesive bonding layer on each surface of the glass core, and a pair of polymeric diethylene glycol bis(allyl carbonate) plastic surface layers, .040 inch thick, and 3 inches in diameter on the adhesive layers.

In one embodiment the plastic surface layers are fully cured polymers of diethylene glycol bis(allyl carbonate), and the adhesive bonding layers are applied to the photochromic glass core and a pressure sufficient to deform the adhesive bonding layers is applied to the plastic surface layers during lamination.

In an alternative embodiment the plastic surface layers are laminated as partially cured polymers of diethylene glycol bis(allyl carbonate) having about 5 weight of a 500,000 viscosity average molecular weight copolymer of 3 weight percent allyl methacrylate and 97 weight percent methyl methacrylate, and about 1.0 weight percent benzoyl peroxide dispersed therethrough. The plastic surface layers have a substantial absence of creep recovery at strains of from about 0.002 to 0.01. Cure is effected by a post lamination heating to about 300°F.

According to a further exemplification of the invention herein contemplated a three layer laminate lens is produced. The lens has a front surface of a 0.02 inch thick, 3 inch diameter, plus 6.00 base curvature photochromic glass lens, a 0.040 inch thick polymeric diethylene glycol bis(allyl carbonate) plastic back surface layer, and a 0.015 inch thick, three inch diameter polyesterurethane adhesive layer between the glass lens and the plastic lens.

In an alternative embodiment of this exemplification the plastic surface layer is a partially cured polymerizate of diethylene glycol bis(allyl carbonate) having about 2 to 7 weight percent of a 300,000 to 500,000 viscosity average molecular weight copolymer of 93 to 97 weight percent methyl methacrylate and 3 to 7

weight percent allyl methacrylate, and 0.5 to 1.5 weight percent benzoyl peroxide dispersed therethrough. After lamination at 270°F. a post cure is carried out at 300°F.

According to a still further exemplification a five layer laminated lens is prepared where the plastic surface and the adhesive bonding layer between the photochromic glass core and the incident light are substantially transparent to ultraviolet radiation, but either the back plastic surface or the back adhesive binding layer or both are responsive to ultraviolet radiation. For example, either the adhesive binding layer or the back plastic surface or both may have an ultraviolet radiation absorbing amount of aromaticity. Alternatively, the front plastic surface layer and adhesive binding layer may be dispensed with and the back plastic surface layer and the back adhesive binding layer may be ultraviolet radiation absorbers incorporated therein.

The following examples are illustrative of this invention:

EXAMPLE I

A five layer glass-plastic laminated lens is prepared having a photochromic glass core, and essentially fully cured external plastic surface layers bonded to the glass core by an adhesive bonding layer. The glass core has a 6.25 base curvature glass lens, the external surface layers were polymerized shapes of diethylene glycol bis(ally carbonate), and the adhesive bonding layers were polyester polyurethanes.

Glass Core

The glass core was a 75 millimeter diameter 0.020 inch thick 6.25 base curvature, photochromic lens.

External Plastic Surface Layer

The external plastic surface layers were two 6.25 base curvature, 75 millimeter diameter, 0.065 inch thick lenses cast from PPG Industries, Inc. CR-39® diethylene glycol bis(allyl carbonate). Each plastic lens was prepared by placing diethylene glycol bis(allyl carbonate) monomer between a pair of 6.25 base curvature glass lens molds, adding 1.5 weight percent diisopropyl peroxydicarbonate thereto, and curing according to the following cure cycle:

| Cumulative Time (hours) | Temperature, °C |
|---|---|
| 0 | 42 |
| 4 | 44 |
| 6 | 45 |
| 8 | 47 |
| 10 | 48 |
| 12 | 50 |
| 14 | 52 |
| 16 | 54.5 |
| 18 | 57 |
| 20 | 61 |
| 22 | 69 |
| 23 | 791 |

Adhesive Bonding Layer

The adhesive bonding layer was a polyester polyurethane having a soft segment and a hard segment. The soft segment was the reaction product of poly(1,4-butane diol adipate) having a number average molecular weight of about 2000 and 4,4'-methylene bis-(cyclohexyl diisocyanate). The hard segment was the reaction product of 1,4 butane diol and 4,4'-methylene diisocyanate. The weight ratio of hard segment to total hard and soft segment was about 0.25 to 1.

Adhesion Promoter

A solution of 0.5 Union Carbide Silane 1100 in methanol was prepared.

Lamination

A laminate was prepared by placing a Teflon® polytetrafluoroethylene sheet, a 0.065 inch thick plastic lens, a 0.020 inch thick polyester polyurethane layer, a 0.020 inch thick curved glass lens, a 0.020 inch thick polyester polyurethane layer, a 0.005 inch thick plastic lens, and a Teflon® polytetrafluoroethylene sheet between two plus 6 base curvature lens grinding mandrels, each of the interior surfaces of the plastic lenses, adhesive bonding layer sheets, and glass lens having been wetted with the silane adhesion promoter.

The assembly was pressed at 300°F. (149°C) for about 2 to 3 minutes at a pressure of about 200 to 300 pounds per square inch.

The resulting laminated lens had good adhesion.

EXAMPLE II

The procedure of Example I was followed with the following changes:

External Plastic Surface Layer

The external plastic surface layers were cured according to the following cure cycle:

| Cumulative Time (hours) | Temperature, °C |
|---|---|
| 0 | 42 |
| 4 | 44 |
| 6 | 45 |
| 8 | 47 |
| 10 | 48 |
| 12 | 50 |
| 14 | 52 |
| 16 | 54.5 |
| 18 | 57 |
| 20 | 61 |
| 22 | 69 |
| 23 | 79 |
| 23.6 | 84 |
| 24 | 98 |
| 24.1 | 100 |

The resulting plastic surface lenses had a "memory", i.e., they were elastic, characterized by creep recovery.

The resulting laminated lenses had good adhesion.

While the methods and articles of this invention have been described with reference to specific exemplifications, embodiments, and examples, the scope of the invention is not to be limited thereby, but solely by the claims appended hereto.

CLAIMS:

1. In a method of preparing a laminate of glass and a transparent resin with an adhesive thermoplastic polyurethane resin therebetween comprising bringing one surface of the adhesive thermoplastic resin into contact with the glass sheet and the opposite surface of the adhesive thermoplastic polyurethane resin into contact with the transparent resin under conditions to effect lamination thereof, the improvement wherein lamination is carried out with a solid transparent resin and the polyurethane resin is applied to the glass sheet as a preformed thermoplastic solid.

2. The method of Claim 1 wherein the polyurethane is a polyester polyurethane that is the reaction product of:

(1) an essentially linear, hydroxy-terminated polyester selected from the group consisting of:

(a) poly(1,4-butylene adipate) having a molecular weight of about 1000 to 2000;

(b) poly(1,4-butylene azealate) having a molecular weight of about 1000 to 2000; and

(c) poly(epsilon caprolactone) having a molecular weight of about 1000 to 2000;

(2) an aliphatic diol having from 2 to 10 carbon atoms; and

(3) 4,4'-methylene bis(cyclohexyl isocyanate); the mole ratio of aliphatic diol to polyester is from about 0.7:1 to about 5.0:1, the quotient of

$$\frac{\left(\text{Moles of Aliphatic Diol}\right)\left[\left(\text{Molecular Weight of Aliphatic Diol}\right)+\left(\text{Molecular Weight of Isocyanate}\right)\right]}{\text{Total Weight of Reactants}}$$

is from about 0.15 to about 0.30, the number of isocyanate groups provided by the 4,4'-methylene bis(cyclohexyl isocyanate) being substantially equivalent to the total number of hydroxy groups provided by the polyester and the aliphatic diol whereby the polyester urethane is substantially free of unreacted isocyanate groups.

3. The method of Claim 2 wherein the aliphatic diol is selected from the group consisting of 1,4-butane diol, 1,3-butane diol, 1,5-butane diol, and 1,6-hexane diol.

4. The method of Claim 2 wherein the 4,4'-methylene bis(cyclohexyl isocyanate) has a stereoisomer content of 19 to 21 percent trans, trans, 17 to 18 percent cis, cis, and 62 to 64 percent cis, trans.

5. The method of Claim 1 wherein the laminate comprises a photochromic agent.

6. The method of Claim 1 wherein the transparent resin is chosen from the group consisting of inelastic solids, viscoelastic solids, and elastic solids, the transparent resin substantially retaining its shape during lamination.

7. The method of Claim 6 wherein the transparent resin is chosen from the group consisting of diol bis(allyl carbonate) homopolymers, diol bis(allyl carbonate) polymers having a second polymer dispersed therethrough, diol bis(allyl carbonate) copolymers with an ultimate physical property enhancing copolymer,poly-(acrylates), poly(arylates), poly(vinyl halides), poly(carbonates), poly(vinyl carbonates), poly(acrylyl carbonates), and poly(amides).

8. The method of Claim 7 wherein the transparent resin is diol bis(allyl carbonate) having a second polymer dispersed therethrough, the second polymer having the formula:

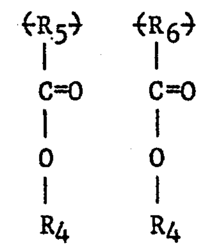

where $R_5COOH$ znd $R_6COOH$ are independently chosen from the group consisting of acrylic acid, methacrylic acid, ethyl acrylic acid, butyl acrylic acid, and propyl acrylic acid, and $R_4OH$ is independently chosen from the group consisting of water, methyl alcohol, ethyl alcohol, and allyl alcohol.

9. The method of Claim 8 wherein the second polymer is chosen from the group consisting of poly(methyl methacrylate) and poly(allyl methacrylate-methyl methacrylate).

10. The method of Claim 7 wherein the transparent resin is diol bis(allyl carbonate) having an ultimate physical property enhancing copolymer chosen from the group consisting of allyl S-triazines and acrylate terminated polyurethanes.

11. The method of Claim 1 wherein the glass and the transparent resin are spherically curved sheets.

12. The method of Claim 11 comprising forming the laminate on one surface of the glass sheet.

13. The method of Claim 12 comprising forming the laminate on both surfaces of the glass sheet.

14. A laminate comprising a glass sheet, a transparent resin, and an adhesive thermoplastic resin therebetween, the transparent resin and the adhesive thermoplastic resin being laminated as preformed solids.

15. A laminate of Claim 14, wherein the adhesive thermoplastic resin is a polyurethane resin.

16. A laminate of Claim 14, wherein the adhesive thermoplastic resin is a thermoset resin sheet comprising a polymerizate of:

(1) a diol bis(allyl carbonate); and
(2) a polyurethane having terminal acrylate

functionality.

17. A laminate of Claim 14, wherein the transparent resin is a resin sheet.

18. The laminate of Claims 14-17 wherein the adhesive thermoplastic polyurethane is a polyester polyurethane that is the reaction product of:

(1) an essentially linear, hydroxy-terminated polyester selected from the group consisting of:
(a) poly(1,4-butylene adipate) having a molecular weight of about 1000 to 2000;
(b) poly (1,4'-butylene azealate) having a molecular weight of about 1000 to 2000; and

(c) poly(epsilon caprolactone) having a molecular weight of about 1000 to 2000;

(2) an aliphatic diol having from 2 to 10 carbon atoms; and

(3) 4,4'-methylene bis(cyclohexyl isocyanate); the mole ratio of aliphatic diol to polyester is from about 0.7:1 to about 5.0:1, the quotient of

$$\frac{\left(\text{Moles of Aliphatic Diol}\right)\left[\left(\text{Molecular Weight of Aliphatic Diol}\right)+\left(\text{Molecular Weight of Isocyanate}\right)\right]}{\text{Total Weight of Reactants}}$$

is from about 0.15 to about 0.30, the number of isocyanate groups provided by the 4,4'-methylene bis(cyclohexyl isocyanate) being substantially equivalent to the total number of hydroxy groups provided by the polyester and the aliphatic diol whereby the polyester urethane is substantially free of unreacted isocyanate groups.

19. The laminate of Claim 18 wherein the aliphatic diol is selected from the group consisting of 1,4-butane diol, 1,3-butane diol, 1,5-butane diol, and 1,6-hexane diol.

20. The laminate of Claim 18 wherein the 4,4'-methylene bis (cyclohexyl isocyanate) has a stereoisomer content of 19 to 21 percent trans, trans, 17 to 18 percent cis, cis, and 62 to 64 percent cis, trans.

21. The laminate of Claim 16, wherein the polyurethane has the formulae chosen from the group consisting of:

(I)

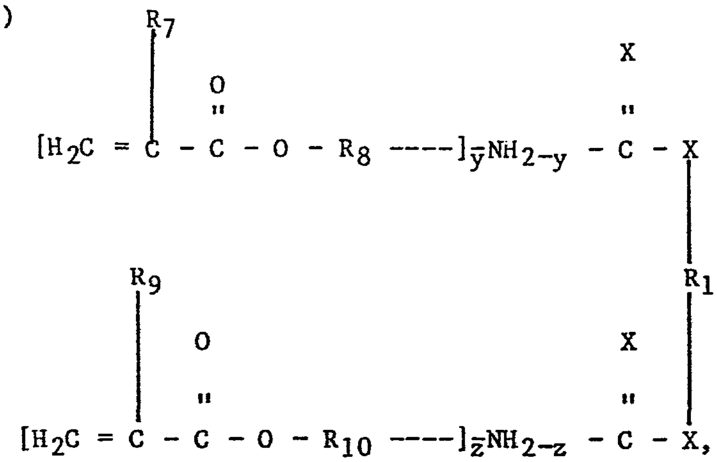

, and

(II)

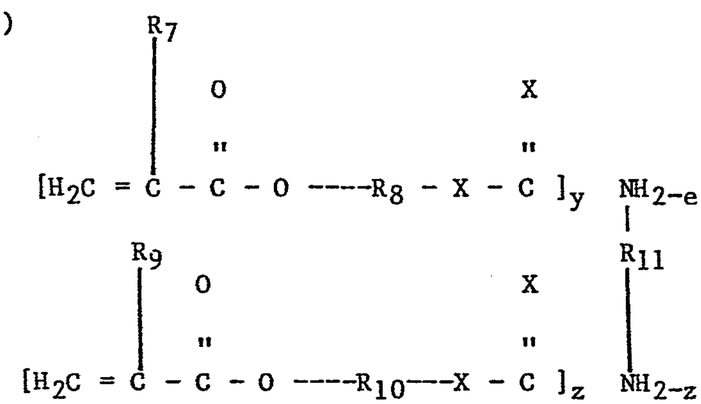

where $R_7$ and $R_9$ are independently chosen from the group consisting of H and $-CH_3$, $R_8$ and $R_{10}$ are independently chosen from the group consisting of $C_1$ to $C_{10}$ alkyls, m and n are independently integers from 1 to 10, y and z are independently 1 or 2, and X is chosen from the group consisting of oxygen and sulfur.

22. The laminate of Claim 21 where $R_{11}$ is a polyether group.

23. The laminate of Claim 22 wherein $R_7$ and $R_9$ are each hydrogen, $R_8$ and $R_{10}$ are independently selected from the group consisting of $-CH_2$ and $-CH_2CH_2-$, and y and z are independently 1 or 2.

24. The laminate of Claims 14 or 17, wherein the transparent resin or resin sheet is chosen from the group consisting of inelastic solids, viscoelastic solids, and elastic solids.

25. The laminate of Claims 24 or 17, wherein the transparent resin chosen from the group consisting of poly(acrylate) polymerizates, poly(vinyl carbonate)

polymerizates, poly(acrylyl carbonate) polymerizates, and interpolymers of two or more of allyl carbonates, acrylates, vinyl carbonates, and acrylyl carbonates.

26. The laminate of Claim 24 wherein the transparent resin is chosen from the group consisting of diol bis(allyl carbonate) homopolymers, diol bis(allyl carbonate) polymers having a second polymer dispersed therethrough, diol bis(allyl carbonate) copolymers with an ultimate physical property enhancing copolymer, poly(acrylates), poly(arylates), poly(vinyl halides), poly(carbonates), poly(vinyl carbonates), poly(acrylyl carbonates), and poly(amides.

27. The laminate of Claim 26 wherein the transparent resin is diol bis(allyl carbonate) having a second polymer dispersed therethrough, the second polymer having the formula:

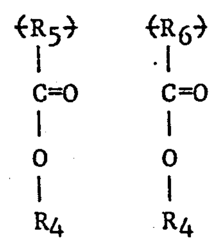

where $R_5COOH$ and $R_6COOH$ are independently chosen from the group consisting of acrylic acid, methacrylic acid, ethyl acrylic acid, butyl acrylic acid, and propyl acrylic acid, and $R_4OH$ is independently chosen from the group consisting of water, methyl alcohol, ethyl alcohol, and allyl alcohol.

28. The laminate of Claim 27 wherein the second polymer is chosen from the group consisting of poly(methyl methacrylate) and poly(allyl methacrylate-methyl methacrylate).

29. The laminate of Claim 26 wherein the transparent resin is a diol bis(allyl carbonate) having an ultimate physical property enhancing copolymer chosen from the group consisting of allyl S-triazines and acrylate terminated polyurethanes.

30. The laminate of Claim 27 wherein the dispersed second polymer is a copolymer of allyl methacrylate and methyl methacrylate.

31. The laminate of Claims 16 and 30 wherein the thermoset resin sheet comprises from about 2 to about 40 weight percent copolymer basis weight of diol bis(allyl carbonate).

32. The laminate of Claims 14 to 31 wherein the glass sheet and the transparent resin sheet are spherically curved sheets.

33. The laminate of Claims 14 to 32 wherein the laminate has a glass sheet core, a transparent resin first outer sheet, a thermoplastic resin adhesive layer between and in contact with one surface of the glass sheet core and the first outer sheet, a transparent resin second outer sheet, and a thermoplastic resin adhesive layer between and in contact with the opposite surface of the glass sheet core and the second outer sheet.

34. The laminate of Claims 14 to 33 wherein the glass sheet core comprises a photochromic agent.

35. The laminate of Claim 33 wherein the transparent outer sheet or at least one of the transparent outer sheets comprises a near infrared absorber.